(19) Europäisches Patentamt
European Patent Office
Office européen des brevets

(11) EP 2 743 313 A1

# (12) EUROPEAN PATENT APPLICATION

(43) Date of publication:
**18.06.2014 Bulletin 2014/25**

(21) Application number: **12197528.8**

(22) Date of filing: **17.12.2012**

(51) Int Cl.:
*C08L 67/00* (2006.01) *C09D 167/00* (2006.01)
*C08L 75/06* (2006.01) *C08L 67/07* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **DSM IP Assets B.V.**
**6411 TE Heerlen (NL)**

(72) Inventors:
- **Haveman, Daniel**
**6100 AA Echt (NL)**
- **Baarzel van, Jacobus Hermanus**
**6100 AA Echt (NL)**
- **Bouwman, René Stéphan**
**6100 AA Echt (NL)**
- **Jansen, Johan Franz Gradus Antonius**
**6100 AA Echt (NL)**

(74) Representative: **Verhaegen, Ilse Maria M.**
**DSM Intellectual Property**
**Urmond Office**
**P.O. Box 4**
**6100 AA Echt (NL)**

## (54) Thermosetting resin composition

(57) This invention relates to a radically curable, thermosetting resin composition comprising:
(a) at least one telechelic urethane methacrylate functional polyester resin,
(b) at least one unsaturated polyester resin, and
(c) at least one methacrylate containing compound, wherein
the telechelic urethane methacrylate functional polyester resins (a) have a weight per unsaturation $WPU_{(a)}$ from 460 up to and including 1000 Dalton, the unsaturated polyester resins (b) have a weight per fumarate unsaturation $WPU_{fumarate(b)}$ from 200 up to and including 1000 Dalton, and
the resin composition is further characterized in that the molar ratio between the methacrylates present in the resin composition and the fumarates present in the resin composition is is from 1 up to and including 25, and in that the amount of styrene in the resin composition is lower than 2 wt.% (relative to the total resin composition).

EP 2 743 313 A1

## Description

The present invention relates to radically curable, thermosetting resin compositions comprising unsaturated polyester resin diluted in reactive diluent (copolymerisable solvent) and being suitable for being applied as for example gelcoat resin composition or bonding paste resin composition.

Unsaturated polyester resin compositions are widely used for various structural applications such as for instance in gelcoats, windmill blades, tanks and pipes, SMC, BMC etc. Curing of resin compositions comprising an unsaturated polyester resin diluted in reactive diluent can be done by a free-radical chain growth crosslinking polymerization between the reactive diluent and the resin present in the resin composition. Peroxides can be used as initiators of free-radical chain growth crosslinking polymerization. Nowadays styrene is still commonly applied as reactive diluent of choice. In fact many of the desired properties of the cured unsaturated polyester resins are due to the use of styrene. The strong beneficial effect of styrene on the desired mechanical properties makes it very difficult to replace styrene with other reactive diluents without detrimentally affecting the mechanical properties of the cured objects, like for example elongation at break. However due to environmental reasons, especially the increased concerns around the safety of the workers when working with styrene, there is a strong desire to replace styrene in unsaturated polyester resin compositions without negatively affecting the mechanical properties too much. For being applicable in for example gelcoats, the resin composition should, upon curing, have an elongation at break of at least 5% without detrimental sacrificing tensile strength and E modulus too much, i.e. having a tensile strength of at least 10 MPa and E -modulus of at least 0.5 GPa (elongation at break, tensile strength and an E modulus measured according to ISO 527).

The object of the present invention is to provide a radically curable, thermosetting resin composition that is essentially styrene free and that upon curing can result in high elongation at break of the cured object, whilst maintaining tensile strength and/or E-modulus at a sufficient level.

The inventors have surprisingly found that this object can be achieved in that the radically curable, thermosetting resin composition comprises

(a) at least one telechelic urethane methacrylate functional polyester resin,
(b) at least one unsaturated polyester resin, and
(c) at least one methacrylate containing compound, wherein
the telechelic urethane methacrylate functional polyester resins (a) have a weight per unsaturation $WPU_{(a)}$ from 460 up to and including 1000 Dalton, the unsaturated polyester resins (b) have a weight per fumarate unsaturation $WPU_{fumarate(b)}$ from 200 up to and including 1000 Dalton, and
the resin composition is further characterized in that the molar ratio between the methacrylates present in the resin composition and the fumarates present in the resin composition is is from 1 up to and including 25, and in that the amount of styrene in the resin composition is lower than 2 wt.% (relative to the total resin composition).

Thermosetting resin compositions harden by chemical reaction, often generating heat when they are formed, and cannot be melted or readily re-formed once hardened. The resin compositions are liquids at normal temperatures and pressures, so can be used to impregnate reinforcements, for instance fibrous reinforcements, especially glass fibers, and/or fillers may be present in the resin composition, but, when treated with suitable radical forming initiators, the various unsaturated components of the resin composition crosslink with each other via a free radical copolymerization mechanism to produce a hard, thermoset plastic mass (also referred to as structural part).

Preferably, the WPU of the telechelic urethane methacrylate functional polyester resins (a) ($WPU_{(a)}$) is ≥ 480 and more preferably ≥ 500 Dalton. Preferably, the WPU of the telechelic urethane methacrylate functional polyester resin (a) ($WPU_{(a)}$) is ≤ 950, more preferably ≤ 900 Dalton and even more preferably ≤ 750 Dalton. The WPU of the telechelic urethane methacrylate functional polyester resin (a) ($WPU_{(a)}$) is most preferably from 500 up to and including 750 Dalton. $WPU_{(a)}$ is determined according to the following equation:

$$WPU_{(a)} = \sum_{i=1}^{n} \alpha_i \times \frac{Mn_i}{Z_i}$$

in which

$$\sum_{i=1}^{n} \alpha_i = 1$$

$\alpha_i$ is equal to the molar fraction of the individual telechelic urethane methacrylate functional polyester resin (a);
n is equal to the number of different telechelic urethane methacrylate functional polyester resins (a) present in the resin composition and $n \geq 1$;
$Z_i$ is equal to the total number of fumarate and methacrylate unsaturations present in said telechelic urethane methacrylate functional polyester resin (a); $Mn_i$ is the molecular weight of said telechelic urethane methacrylate functional polyester resin (a).

The telechelic urethane methacrylate functional polyester resins (a) are preferably telechelic urethane methacrylate functional unsaturated polyester resins which are preferably prepared from at least (i) an hydroxyl functional methacrylate, (ii) a (poly)isocyanate with an isocyanate functionality of ≥ 2 and (iii) an hydroxyl functional unsaturated polyester resin with an acid value < 25 mg KOH/g resin, preferably from 12.8 - 18.1 mg KOH/g resin, an hydroxyl value of from 70 up to and including 200 mg KOH/ g resin and a molecular weight $M_n$ from 1000 up to and including 2000 Dalton. Non-limiting examples of hydroxyl functional methacrylates are hydroxyl ethyl methacrylate (HEMA), 2-hydroxy propyl methacrylate (HPMA), 3-hydroxy propyl methacrylate, 4-hydroxy butyl methacrylate, and any mixture thereof. Non-limiting examples of aromatic and/or aliphatic di isocyanates (f=2) are toluene diisocyanate (TDI), 4,4'-methylene diphenyl diisocyanate (MDI), hexanediisocyanate (HDI), isopherone diisocyanate (IPDI) hydrogenated 4,4'-methylene diphenyl diisocyanate (HMDI). Non-limiting examples of aromatic and/or aliphatic tri- isocyanates (f=3) are TDI trimers, HDI trimers, polymeric MDI and polymeric HDI . Polymeric MDI and polymeric HDI usually have an average functionality from 2 to 3 and may comprise triisocyanates next to for example diisocyanates. Mixtures of the above mentioned isocyanates can be used as well. Preferred aromatic and/or aliphatic di and/or triisocyanates are toluene diisocyanate (TDI), 4,4'-methylene diphenyl diisocyanate (MDI), hexanediisocyanate (HDI), isopherone diisocyanate (IPDI) TDI trimers, HDI trimers, and polymeric MDI (pMDI) especially MDI and polymeric MDI are preferred. In a preferred embodiment of the invention, aromatic and/or aliphatic isocyanate with average functionality from 2 up to and including 3 are used as isocyanate compound. In a more preferred embodiment of the invention the isocyanate compound comprises aromatic and / or aliphatic diisocyanate.

The telechelic urethane methacrylate functional polyester resins (a) present in the resin composition are preferably according to the following structural formula

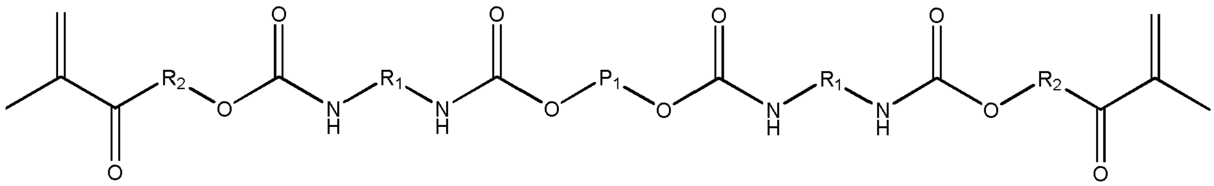

in which $P_1$ is representing unsaturated polyester resin, $R_1$ is the isocyanate residue and $R_2$ is -(CH2)2- and/or -CH2CH(CH3)-. Preferably, $R_1$ is a residue of an aromatic or aliphatic di- and/or tri- isocyanate or of a polymeric di- or tri-isocyanate or mixtures thereof. More preferably, $R_1$ is a residue of a polymeric di- or tri-isocyanate or mixtures thereof such as polymeric methylene diphenyl diisocyanate and polymeric hexane diisocyanate. More preferably, $R_1$ is a residue of polymeric methylene diphenyl diisocyanate. Preferably, $P_1$ originates from an hydroxyl functional unsaturated polyester resin with an acid value < 25 mg KOH/g resin, preferably an acid value from 12.8 up to and including 18.1 mg KOH/g resin, and an hydroxyl value of from 70 up to and including 200 mg KOH g resin and a molecular weight $M_n$ from 1000 up to and including 2000 Dalton.

Preferably, the telechelic urethane methacrylate functional polyester resins (a) present in the resin composition are telechelic urethane methacrylate functional unsaturated polyester resins comprising fumaric building blocks. More preferably, the reactive unsaturations of the unsaturated polyester resin in the telechelic urethane methacrylate functional unsaturated polyester resins are fumarate unsaturations.

Preferably, the telechelic urethane methacrylate functional polyester resins (a) present in the resin composition are telechelic urethane methacrylate functional unsaturated polyester resins comprising building blocks derived from 2,2-dialkyl-1,3-propanediol in which the alkyl groups are independently selected from a C1-C4 alkyl. More preferably, the telechelic urethane methacrylate functional polyester resins (a) present in the resin composition are telechelic urethane methacrylate functional unsaturated polyester resins comprising building blocks derived from neopentyl glycol and/or 2-butyl-2-ethyl-1,3-propanediol.

Preferably, the telechelic urethane methacrylate functional polyester resins (a) present in the resin composition are telechelic urethane methacrylate functional unsaturated polyester resins comprising phthalic building blocks, preferably isophthalic building blocks.

More preferably, the telechelic urethane methacrylate functional polyester resins (a) present in the resin composition are telechelic urethane methacrylate functional unsaturated polyester resins comprising fumarate building blocks, building blocks derived from 2,2-dialkyl-1,3-propanediol in which the alkyl groups are independently selected from a C1-C4 alkyl and further comprising phthalic building blocks, wherein the ratio of the molar amount of the building blocks derived from 2,2-dialkyl-1,3-propanediol and the molar amount of phthalic building blocks is from 4:1 up to and including 12:1.

The telechelic urethane methacrylate functional polyester resins (a) preferably have a methacrylate functionality > 1.7 and a molecular weight $M_n$ of from 1600 up to and including 3500 Dalton, preferably from 1700 up to and including 2500 Dalton. The telechelic urethane methacrylate functional polyester resins (a) preferably have an acid value < 10 mg KOH/g resin and an hydroxyl value of from 4 up to and including 25 mg KOH/ g resin. The telechelic urethane methacrylate functional polyester resins (a) preferably have an acid value higher than 2 mg KOH/g resin. The telechelic urethane methacrylate functional polyester resins (a) preferably have an hydroxyl value higher than 5 mg KOH/g resin. The telechelic urethane methacrylate functional polyester resins (a) preferably have a molecular weight $M_n$ higher than 1650 Dalton and preferably lower than 3400 Dalton.

Preferably, the weight per fumarate unsaturation $WPU_{fumarate(a)}$ of the telechelic urethane methacrylate functional unsaturated polyester resins (a) is in the range from 1000 up to and including 5000. $WPU_{fumarate(a)}$ is determined according to the following equation:

$$WPU_{fumarate\ (a)} = \sum_{i=1}^{n} \alpha_i \times \frac{Mn_i}{Z_i}$$

in which

$$\sum_{i=1}^{n} \alpha_i = 1$$

$\alpha_i$ is equal to the molar fraction of the individual telechelic urethane methacrylate functional polyester resin (a);
n is equal to the number of different telechelic urethane methacrylate functional polyester resins (a) present in the resin composition and n ≥ 1;
$Z_i$ is equal to the total number of fumarate unsaturations present in said telechelic urethane methacrylate functional polyester resin (a);
$Mn_i$ is the molecular weight of said telechelic urethane methacrylate functional polyester resin (a).

Preferably, the weight per fumarate unsaturation $WPU_{fumarate(b)}$ of the unsaturated polyester resins (b) is ≥ 225, more preferably ≥ 250, even more preferably ≥ 275 and even more preferably ≥ 300. Preferably, the weight per fumarate unsaturation $WPU_{fumarate(b)}$ of the unsaturated polyester resin (b) is ≤ 750, more preferably ≤ 700, even more preferably ≤ 650 and even more preferably ≤ 500. The weight per fumarate unsaturation $WPU_{fumarate(b)}$ of the unsaturated polyester resin (b) is even more preferably from 250 up to and including 750 Dalton and most preferably from 225 up to and including 500 Dalton. $WPU_{fumarate(b)}$ is determined according to the following equation:

$$WPU_{fumarate\ (b)} = \sum_{i=1}^{n} \alpha_i \times \frac{Mn_i}{Z_i}$$

in which

$$\sum_{i=1}^{n} \alpha_i = 1$$

$\alpha_i$ is equal to the molar fraction of the individual unsaturated polyester resin (b); n is equal to the number of different unsaturated polyester resins (b) present in the resin composition and n ≥ 1;
$Z_i$ is equal to the total number of fumarate unsaturations present in said unsaturated polyester resin (b);
$Mn_i$ is the molecular weight of said unsaturated polyester resin (b).

The unsaturated polyester resins (b) preferably have an acid value < 20 mg KOH/g resin and an hydroxyl value of < 30 mg KOH/ g resin. Preferably the unsaturated polyester resins (b) have a viscosity at room temperature of from

50 up to and including 400 mPa.s. The molecular weight $M_n$ of the unsaturated polyester resins (b) is preferably from 350 up to and including 600 Dalton, more preferably from 375 up to and including 550 Dalton.

As used herein, the molecular weight $M_n$ for (a) and (b) is determined in tetrahydrofurane using gel permeation chromatography according to ISO 13885-1 employing polystyrene standards and appropriate columns designed for the determination of the molecular weights. The acid values (AV) (mg KOH/g) are determined titrimetrically according to ISO 2114-2000. The hydroxyl values (OHV) (mg KOH/g) are determined titrimetically using ISO 4629-1978.

The methacrylate containing compounds (c) present in the resin composition have the function of reactive diluent (copolymerizable solvent). For clarity purpose, a reactive diluent is a diluent for the resins (a) and (b) present in the resin composition (i.e. the methacrylates (c) are present in the resin composition for lowering of the viscosity of the resins (a) and (b) present in the resin composition), which diluent is able to copolymerize with the resins (a) and (b). Suitable examples of methacrylates (c) are hydroxyl ethyl methacrylate, hydroxyl propyl methacrylate, butyl methacrylate, hexyl methacrylate and cyclohexyl methacrylate, phenoxyethyl methacrylate, tetrahydro furfuryl methacrylate, allyl methacrylate, PEG200 dimethacrylate, 1,4-butanediol dimethacrylate, 1,3-butanediol dimethacrylate, 2,3-butanedioldimethacrylate, 1,6-hexanediol dimethacrylate and its isomers, diethyleneglycol dimethacrylate, triethyleneglycol dimethacrylate, glycerol dimethacrylate, trimethylolpropane dimethacrylate, neopentyl glycol dimethacrylate, dipropyleneglycol dimethacrylate, tripropyleneglycol dimethacrylate, PPG250 dimethacrylate, tricyclodecane dimethylol dimethacrylate, 1,10-decanediol dimethacrylate , tetraethylene glycol dimethacrylate and any mixture thereof. Preferred methacrylates (c) are hydroxyl ethyl methacrylate, hydroxyl propyl methacrylate 1,4-butanediol dimethacrylate, neopentylglycol dimethacrylate, PEG200 dimethacrylate, triethyleneglycol dimethacrylate, tripropylene glycol dimethacrylate and any mixture thereof.

Besides the methacrylates (c), optionally also other reactive diluents may be present. The total amount of reactive diluents in the resin composition according to the invention, i.e. the methacrylates (c) with optionally other reactive diluents, is in the range from 15 to 70 wt.%. The amount of methacrylates (c) in the total amount of reactive diluent is between 70 and 100 wt.%, more preferably between 90 and 100 wt.% and even more preferably is 100 wt.%. Ethylenically unsaturated compounds can be advantageously used as additional reactive diluent such as diitaconates, vinyl esters, vinyl amides, vinyl ethers and acrylates.

It has surprisingly been found that upon curing the resin composition according to the invention, high elongation at break of the cured object can be obtained whilst maintaining tensile strength and/or E-modulus at a sufficient level. This can even surprisingly be achieved while the resin composition is essentially free styrene. The styrene concentration in the resin composition is lower than 2 wt.%, preferably lower than 1 wt.% and more preferably lower than 0.01 wt.% (relative to the total resin composition). Most preferably the resin composition is free of styrene.

Preferably, the methacrylate containing compounds (c) have a weight per methacrylate unsaturation $WPU_{methacrylate(c)}$ from 100 up to and including 250. $WPU_{methacrylate(c)}$ is determined according to the following equation:

$$WPU_{methacrylate\,(c)} = \sum_{i=1}^{n} \alpha_i \times \frac{Mn_i}{Z_i}$$

in which

$$\sum_{i=1}^{n} \alpha_i = 1$$

$\alpha_i$ is equal to the molar fraction of the individual methacrylate (c); n is equal to the number of different methacrylates (c) present in the resin composition and $n \geq 1$;

$Z_i$ is equal to the total number of methacrylate unsaturations present in said methacrylate (c);

$Mn_i$ is the molecular weight of said methacrylate (c).

The methacrylates (c) preferably have a molecular weight $M_n$ < 500 Dalton. The viscosity at room temperature of the methacrylate (c) is preferably < 30 mPa.s, more preferably < 20 mPa.s.

The molar ratio between the methacrylates present in the resin composition and the fumarates present in the resin composition is preferably from 1 up to and including 18. Preferably, in the resin composition according to the invention, the telechelic urethane methacrylate functional polyester resins (a) have a methacrylate functionality > 1.7 and a molecular weight $M_n$ of from 1600 up to and including 3500 Dalton; the unsaturated polyester resins (b) have an acid value < 20 mg KOH/g resin, an hydroxyl value of < 30 mg KOH/ g resin and a viscosity at room temperature of from 50 up to and

including 400 mPa.s; and the methacrylates (c) have a molecular weight $M_n$ < 500 Dalton.

In order to obtain curing of the thermosetting resin composition according to the invention, a radical initiator has to be added to the resin composition as described above. The radical initiator is added to the resin composition in such an amount that the amount of radical initiator in the resin composition is between 0.00001-5 wt.%. Preferably this quantity lies between 0.1 and 5 wt.% (relative to the total resin composition).

The radical initiator, which is applied in the resin composition according to the invention, is as a rule chosen from initiators which are suitable for thermal curing (thermal initiators), light curing (photo-initiators) or room temperature curing by means of redox initiation (redox initiators). Thermal curing is understood to be curing of the resin composition by means of heat. Photo-initiation is understood to be curing using irradiation with light of a suitable wavelength (photo irradiation). This is also referred to as light cure.

In one embodiment of the invention, the initiator is a photo-initiator. In this embodiment the resin composition preferably comprises a cleavage type photo-initiator, more preferably a α-hydroxy aryl ketone like for instance Irgacure 184, Irgacure 369, Darocure 1173 (Ciba) or acyl phosphine oxides like for instance Lucerine TPO, Lucerine TPO-L (BASF), Irgacure 819 (Ciba) or mixtures thereof. Even more preferably, the photoinitiator is an acyl phosphine oxide. The acyl phosphine oxide is a mono acyl phosphine oxide or a bis acyl phosphine oxide. Most preferably, the photo-initiator is a bis acyl phosphine oxide. A preferred bis acyl phosphine oxide is bis (2,4,6-trimethylbenzoyl) phenylphosphine oxide (Irgacure 819). The quantity of photo-initiator is preferably between 0.1 and 2 wt.%, more preferably between 0.2 and 1 wt.%. In this embodiment of the invention, the curing is effected by irradiating the resin composition comprising the photo-initiator with light of suitable wavelength.

In another embodiment of the invention, the initiator is a thermal initiator. Examples of suitable thermal initiators are azo compounds like azo isobutyronitril (AIBN) and derivatives thereof, and organic peroxides. The thermal initiator is preferably an organic peroxide, or a combination of two or more organic peroxides. Examples of suitable peroxides are, for instance, monoperoxy carbonates (also referred to as monopercarbonates) (of the formula -OC(O)OO-), peroxy dicarbonates (also referred to as dipercarbonate) (of the formula the formula -OC(O)OOC(O)O-), peroxyesters (also referred to as peresters) (of the formula -C(O)OO-), diacylperoxides (of the formula -C(O)OOC(O)-), dialkylperoxides (of the formula -OO-), etc. The peroxides can also be oligomeric or polymeric in nature. An extensive series of examples of suitable peroxides can be found, for instance, in US 2002/0091214-A1, paragraph [0018]. The skilled person can easily obtain information about the peroxides and the precautions to be taken in handling the peroxides in the instructions as given by the peroxide producers. The thermal initiator is preferably selected from a perester, a perdicarbonate, a monopercarbonate or a mixture thereof. In this embodiment of the invention, the curing is effected by heating the resin composition comprising the thermal initiator. In case thermal curing is applied, the curing is preferably effected at a temperature in the range of from 80 °C to 200 °C and even more preferably from 80 °C to 150 °C.

In another embodiment of the invention, the initiator is a redox initiator. A preferred redox initiator is the combination of at least one transition metal compounds like for example Co, Cu, Mn, Fe compounds in combination with a hydroperoxide like for instance t-butyl hydroperoxide and cumenehydroperoxide, a perketal like for instance methyl ethyl ketone peroxide and acetylacetone peroxide, a perester like for instance t-butyl perbenzoate and a percarbonate, preferably in combination with an organic compound. The organic compound can be any organic compound that can be oxidized or reduced. Suitable examples are 1,2-dioxo compounds, 1,3-dioxo compounds, thiols, and N containing compounds like amides and amines. Preferably the organic compound is an N-containing compound. Examples of N-containing compounds are dimethylaniline, diethylaniline, dimethylparatoluidine, diethylhydroxylamine, N,N-diethylacetoacetamide, benzyl amine, p-toluidine, 2-(N-ethylanilino)ethanol, triethanol amine, triethyl amine and Jeffamines, like for example Jeffamine D-2000. In this embodiment of the invention, the curing is effected by mixing the peroxide into the resin composition comprising the transition metal compound or alternatively the curing is effected by mixing the peroxide and the transition metal compound into the resin composition. The organic compound that is optionally applied may for example be present in the resin composition prior to addition of the peroxide or can be added to the resin composition simultaneously with the peroxide. Still another preferred redox initiator is the combination of an tertiary aromatic amine like N,N-dimethylaniline, N,N-diethylaniline, N,N-dimethylparatoluidine, N,N-diisopropyltoluidine with a peranhydride like for instance di benzoyl peroxide (BPO) or di lauroyl peroxide. In this embodiment of the invention, the curing is effected by mixing the peroxide into the resin composition comprising the tertiary aromatic amine or alternatively the curing is effected by mixing the peroxide and the tertiary aromatic amine into the resin composition. In case the curing is effected by redox initiation, the curing is preferably effected at a temperature in the range of from -10 to +80 °C and even more preferably at room temperature (from 20 up to and including 25 °C).

For obtaining gelcoats room temperature curing is preferred.

The resin compositions according to the invention may contain one or more inhibitors. The inhibitor of the resin composition of the invention can be any radical inhibitor known to the skilled man, preferably chosen from the group of phenolic compounds, stable radicals like galvinoxyl and N-oxyl based compounds and/or phenothiazines. Suitable examples of inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine and/or derivatives or combinations of any of these compounds.

Advantageously, the amount of inhibitor in the resin composition according to the invention is in the range of from 0.00001 to 5 % by weight, preferably from 0.0001 to 2 % by weight, more preferably, from 0.001 to 1 % by weight (relative to the total resin composition). The type and amount of inhibitor depends on the type of curing. For example, In case of thermal curing 2,6-di-t-butyl-4-methylphenol and 2-methylhydroquinone are very suitable inhibitors.

For several applications, colour of the cured objects can be an important issue. Therefore according to one embodiment of the current invention the composition preferably further comprises fillers and/or pigments. In particular the present invention relates to a gelcoat resin composition that further comprises, next to the compounds as described above, pigments and a thixotrope, preferably fumed silica. A gelcoat resin composition is used to provide a gelcoat layer (that is in the present invention considered a structural part) on a support surface.

The invention is now demonstrated by means of a series of examples and comparative examples. All examples are supportive of the scope of claims. The invention, however, is not restricted to the specific embodiments as shown in the examples.

<u>EXPERIMENTAL</u>

**Analytical methods**

Viscosities were determined according to ISO 3219, except for the viscosities of the resin (a) which was determined according to ISO 2884 (C&P method).

Tensile modulus, tensile strength and elongation at break were measured according to ISO 527.

**Calculation of weight per unsaturation (WPU)**

The WPU (weight per unsaturation) was determined by dividing the $M_n$ of the compound by the amount of unsaturations present in the compound. Thus the WPU's were calculated according the following theoretically calculation:

$$WPU = \frac{Mn\ of\ the\ compound}{\sum unstaturations / compound}$$

An example will elucidate the theoretical calculation.

For example, suppose the resin has a structural formula as shown below and the molecular weight $M_n$ of the resin is 1000 Dalton.

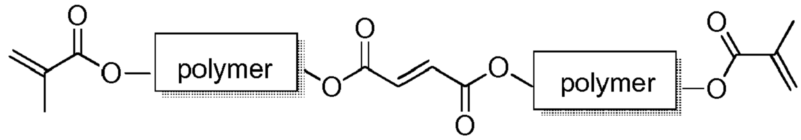

The different WPU's are then calculated as indicated below.

- WPU of the resin (weight per unsaturation present in the resin): $M_n$ = 1000; Sum of amount of fumarate unsaturations + methacrylate unsaturations = 1+2 = 3.

$$\mathrm{WPU_{resin}} = \frac{1000}{3} = 333$$

- $WPU_{fumarate\ resin}$ (weight per fumarate unsaturation in the resin) : $M_n$ = 1000; Total amount of fumarate unsaturations = 1.

$$\mathrm{WPU_{fumarate\ resin}} = \frac{1000}{1} = 1000$$

- $WPU_{methacrylate\ resin}$: Mn = 1000; Total amount of methacrylate unsaturations = 2.

$$WPU_{\mathrm{methacrylate\ resin}} = \frac{1000}{2} = 500$$

**Synthesis of resins**

Preparation of Resin A

Synthesis of unsaturated polyester resin

468g Neopentyl glycol, 38g propylene glycol, 394.2g adipic acid , 149.4 g isophtalic acid , 39.2g maleic anhydride and 0.15g hydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 20 mg KOH/g resin. Then the vacuum was relieved with inert gas, and the mixture was cooled down to 80 °C.

The resulting unsaturated polyester resin A1 had an acid value of 13 mg KOH/g, a hydroxylvalue of 96 mg KOH/g and a $M_n$ of 1506 Dalton.

Synthesis of telechelic urethane methacrylate functional polyester resin A (resin A)

To this resin was slowly added 348g toluenediisocyanate and 397.1 g polyethyleneglycol-200-dimethacrylate (PEG200DMA) whilst maintaining a temperature below 90 °C followed by the slow addition of 288.2g hydroxypropyl methacrylate (HPMA). After the addition of HPMA the resin was kept at 90 °C until the NCO value had dropped below 0.1% (followed by IR). The resin was now cooled to room temperature and the so obtained telechelic urethane methacrylate polyester resin A had an acid value of 7.1 mg KOH/g, a hydroxyl value of 16.7 mg KOH/g, a $M_n$ of 2206 Dalton and a viscosity of 1110 mPa.s. The calculated $WPU_{fumarate(a)}$ is 3970, the calculated $WPU_{methacrylate(a)}$ is 794 and the $WPU_{(a)}$ =662.

Preparation of Resin B

Synthesis of unsaturated polyester resin

187.2g Neopentyl glycol, 15.2g propylene glycol, 97.8g adipic acid , 38.2 g isophtalic acid , 9.8g maleic anhydride and 0.15g hydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 20 mg KOH/g resin. Then the vacuum was relieved with inert gas, and the mixture was cooled down to 80 °C.

The resulting unsaturated polyester resin B1 had an acid value of 12.5 mg KOH/g, an hydroxylvalue of 103 mg KOH/g and an $M_n$ of 1389.

Synthesis of telechelic urethane methacrylate functional polyester resin B (resin B)

To this resin was slowly added 348g toluenediisocyanate and 237.5 g polyethyleneglycol-200-dimethacrylate (Peg200DMA) whilst maintaining a temperature below 90 °C followed by the slow addition of 288.2g hydroxypropyl methacrylate (HPMA). After the addition of HPMA, the resin was kept at 90 °C until the NCO value had dropped below

0.1% (followed by IR). The resin was now cooled to room temperature and the so obtained telechelic urethane methacrylate polyester resin B had an acid value of 3.4 mg KOH/g, a hydroxyl value of 5.3 mg KOH/g, a $M_n$ of 1871 Dalton and a viscosity of 1764 mPa.s. The calculated $WPU_{fumarate(a)}$ is 1300, the calculated $WPU_{methacrylate(a)}$ is 780 and the $WPU_{(a)}$ =487.

Preparation of Resin C

Synthesis of unsaturated polyester resin

468g neopentyl glycol, 38g propylene glycol, 306g adipic acid , 116.2g isophtalic acid, 117.6g maleic anhydride and 0.15g hydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 20 mg KOH/g resin. Then the vacuum was relieved with inert gas, and the mixture was cooled down to 80 °C.

The resulting unsaturated polyester resin C1 had an acid value of 18.1 mg KOH/g, an hydroxylvalue of 89.8 mg KOH/g and an $M_n$ of 2165.

Synthesis of telechelic urethane methacrylate functional polyester resin C (resin C)

To this resin was slowly added 348g toluenediisocyanate and 390g polyethyleneglycol-200-dimethacrylate (Peg200DMA) whilst maintaining a temperature below 90 °C followed by the slow addition of 288.2g hydroxypropyl methacrylate (HPMA). After the addition of HPMA the resin was kept at 90 °C until the NCO value had dropped below 0.1% (followed by IR). The resin was now cooled to room temperature and the so obtained telechelic urethane methacrylate polyester resin C had an acid value of 7.8 mg KOH/g, a hydroxyl value of 0 mg KOH/g, a $M_n$ of 3192 Dalton and a viscosity of 994 mPa.s. The calculated $WPU_{fumarate(a)}$ is 9502, the calculated $WPU_{methacrylate(a)}$ is 475 and the $WPU_{(a)}$ =452.

Preparation of Resin D

Synthesis of unsaturated polyester resin

187.2g Neopentyl glycol, 15.2g propylene glycol, 76.7g adipic acid , 29.1 g isophtalic acid , 29.4g maleic anhydride and 0.15g hydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 20 mg KOH/g resin. Then the vacuum was relieved with inert gas, and the mixture was cooled down to 80 °C. The resulting unsaturated polyester resin D1 had an acid value of 16.0 mg KOH/g, an hydroxylvalue of 312 mg KOH/g and a $M_n$ of 1120.

Synthesis of telechelic urethane methacrylate functional polyester resin D (resin D)

To this resin was slowly added 348g toluenediisocyanate and 235.8 g polyethyleneglycol 200 dimethacrylate (Peg200DMA) whilst maintaining a temperature below 90 °C followed by the slow addition of 288.2g hydroxypropyl methacrylate (HPMA). After the addition of HPMA the resin was kept at 90 °C until the NCO value had dropped below 0.1% (followed by IR). The resin was now cooled to room temperature and the so obtained telechelic urethane methacrylate polyester resin D had an acid value of 3.2 mg KOH/g, a hydroxyl value of 1.9 mg KOH/g, a $M_n$ of 1885 Dalton and a viscosity of 1000 mPa.s. The calculated $WPU_{fumarate(a)}$ is 3143, the calculated $WPU_{methacrylate(a)}$ is 472 and the $WPU_{(a)}$ =410.

Preparation of unsaturated polyester resin E

130.5g propylene glycol, 382.6g maleic anhydride and 0.15g hydroquinone were charged in a vessel equipped with a reflux condenser, a temperature measurement device and inert gas inlet. The mixture showed and exothermic reaction and kept at 145°C for 45 mins.5 °C. Next the mixture was cooled to 130°C , the vacuum was relieved with inert gas and 300 g 2-ethylhexanol and 288g benzyl alcohol were charged into the reactor. Again the mixture was heated slowly by usual methods to 205 °C. At 205 °C the mixture was kept under reduced pressure until the acid value reached a value below 20 mg KOH/g resin. The resin was now cooled down to room tempertaure.

The resulting unsaturated polyester resin E had an acid value of 16.1 mg KOH/g, an hydroxylvalue of 28.79 mg KOH/g, a $M_n$ of 456 Dalton and a viscosity at 23°C of 167 MPa.s. The calculated $WPU_{fumarate(b)}$ is 264.

All amounts given are weight amounts, unless indicated otherwise.

Example 1 and Comparative Experiments A-B

In Example 1, a resin composition as given in Table 1 was obtained by mixing the unsaturated polyester resin with the telechelic urethane methacrylate resin and the diluent, to which 0.5g cobalt octanoate (1%Co in spirits) was added followed by 2% Butanox M50. Table 1 also refers to data presented in WO03/093381 and WO2008/077586 (see comparative experiment A and B in Table 1).

Table 1

| Example 1 | Amount (g) of telechelic urethane methacrylate polyester A ($WPU_{(a)}$)= 662) | Amount (g) of unsaturated polyester resin E ($WPU_{fumarate(b)}$ = 264) | Amount (g) of diluent (PEG200 DMA) ($WPU_{methacrylate(c)}$=165) | E modulus (GPa) | Tensile strength (MPa | Elongation at break (%) | Molar ratio methacrylate/fumarate |
|---|---|---|---|---|---|---|---|
| | 40 | 5 | 55 | 1.5 | 41 | 11.5 | 11.9 |
| Comparative Experiment A (Mixture 4 of WO03/093381) | Amount of telechelic urethanemethacrylate polyether (WPU = 278) | Amount of unsaturated polyester resin ($WPU_{fumarate}$ = 1338) | Amount of diluent (BDDMA) ($WPU_{methacrylate}$=113) | | | | |
| | 45 | 15 | 40 | 2.1 | 21 | 1 | 14.4 |
| Comparative Experiment B (=Example 1 of WO2008/077586) | Amount of epoxy methacrylate (WPU = 280) | Amount of unsaturated polyester resin ($WPU_{fumarate}$= 1338) | Amount of diluent | | | | |
| | 59 | 5 | 35 PEG200DMA 1 BDDMA | 2.9 | 60 | 2.8 | 56.5 |

In comparative experiments A and B, the elongation at break is significantly lower than compared to the elongation at break as obtained in example 1. When using, instead of a telechelic urethane methacrylate polyester resin as claimed, a telechelic urethane methacrylate polyether with a WPU lower than the $WPU_{(a)}$ as claimed and when using an unsaturated polyester resin with a $WPU_{fumarate}$ higher than the $WPU_{fumarate(b)}$ as claimed but using a molar ratio methacrylate/fumarate as claimed (see comparative experiment A), the elongation at break is much lower than when using a resin composition as claimed. When using a telechelic urethane methacrylate polyester resin with a WPU lower than the $WPU_{(a)}$ as claimed and when using an unsaturated polyester resin with a $WPU_{fumarate}$ higher than the $WPU_{fumarate(b)}$ as claimed and using a molar ratio methacrylate/fumarate that is higher as claimed (see comparative experiment B), the elongation at break is much lower than when using a resin composition as claimed.

Table 2 demonstrates that for a high elongation at break both a telechelic urethane methacrylate polyester resin with WPU's as claimed and an unsaturated polyester resin with a $WPU_{fumarate}$ as claimed in a methacrylate diluent are required.

<u>Examples 2-4 and comparative experiments C-E</u>

Resin formulations were prepared according to table 2 to which 0.5g cobalt octanoate (1%Co in spirits) was added followed by 2% Butanox M50. 4 mm castings were prepared according to the formulations. The casting were released and post cured during 24hrs at 80°C. The results are shown in table 2.

Table 2

| ex | Telechelic urethane methacrylate unsaturated polyester resin A (g) | Unsaturated polyester resin E (g) | Methacrylate (g) diluent | Visco (mPa.s) | E modulus (GPa) | Tensile strength (MPa | Elongation at break (%) | Molar ratio methacrylate/fumarate |
|---|---|---|---|---|---|---|---|---|
| 2 | 40 | 5 | PEG200DMA (55) | 1095 | 1.5 | 41 | 11.5 | 11.9 |
| C | 40 | | PEG200DMA (60) | 628 | 1.9 | 43 | 3.3 | 36.7 |
| 3 | 40 | 5 | HPMA (35)<br>PEG200DMA (20) | 432 | 2.3 | 54 | 23.4 | 13.8 |
| D | 40 | | HPMA (30)<br>PEG200DMA (30) | 256 | 2.9 | 29 | 1 | 41.2 |
| 4 | 40 | 20 | Peg200DMA (20)<br>HPMA (20) | 1244 | 0.9 | 23.4 | 46.0 | 3.5 |
| E | 40 | 0 | PEG200DMA (30)<br>HPMA (30) | 356 | 2.9 | 29.3 | 1.0 | 41.2 |

Table 2 demonstrates that for a high elongation at break both a telechelic urethane methacrylate polyester resin and an unsaturated polyester resin in a methacrylate diluent are required.

These experiments clearly demonstrate the unexpected effect of adding an unsaturated polyester resin to a telechelic urethane methacrylate functional polyester resin: Comparing example 2 with comparative experiment C and example 3 with comparative experiment D clearly shows a surprising effect on the elongation at break whilst the tensile strength and modulus remain on similar level or sometimes even increase.

These examples also show that various methacrylate diluents and mixtures thereof can be used in the present invention.

Example 5 and comparative experiment F

Resin formulations were prepared according to table 3 to which 0.5g cobalt octanoate (1%Co in spirits) was added followed by 2 % Butanox M50. 4 mm castings were prepared according to the formulations. The casting were released and post cured during 24hrs at 80°C. The results are shown in table 3.

Table 3

| ex | Resin B (g) | Resin E (g) | Methacrylate (g) | Visco (mPa.s) | E modulus (GPa) | Tensile strength (MPa | Elongation at break (%) | Molar ratio methacrylate/fumarate |
|---|---|---|---|---|---|---|---|---|
| 5 | 40 | 20 | Peg200DMA (20) HPMA (20) | 1866 | 2.2 | 52 | 13.2 | 2.8 |
| F | 40 | 0 | PEG200DMA (30) HPMA (30) | 704 | 3.9 | 54 | 1.6 | 13.7 |

Example 5 and comparative experiment F also show the beneficial effect of the resin composition according to the invention on the elongation at break.

Example 6 and comparative experiments G-H

Resin formulations were prepared according to table 4 to which 0.5g cobalt octanoate (1%Co in spirits) was added followed by 2% Butanox M50. 4 mm castings were prepared according to the formulations. The casting were released and post cured during 24hrs at 80°C. The results are shown in table 4.

Table 4

| ex | Resin (g) | Resin E (g) | Methacrylate(s) (g) | E modulus (GPa) | Elongation at break (%) | Molar ratio methacrylate/fumarate |
|---|---|---|---|---|---|---|
| 6 | A (40) $WPU_{(a)}$ = 662 | 5 | HPMA (35) PEG200DMA (20) | 2.3 | 23.4 | 13.8 |
| G | C (40) $WPU_{(a)}$ =452 | 5 | HPMA (35) PEG200DMA (20) | 2.7 | 4.5 | 18.8 |
| H | D (40) $WPU_{(a)}$ =410 | 5 | HPMA (35) PEG200DMA (20) | 3.8 | 2.4 | 13.8 |

In comparative experiments G and H, the elongation at break is significantly lower than compared to the elongation at break as obtained in example 6. When using, instead of a telechelic urethane methacrylate polyester resin with a WPU as claimed, a telechelic urethane methacrylate polyether with a WPU lower than the $WPU_{(a)}$ as claimed, the elongation at break is much lower than when using a resin composition as claimed.

Example 7-9 and comparative experiment I

Resin formulations were prepared according to table 5 to which 0.5g cobalt octanoate (1%Co in spirits) was added followed by 2% Butanox M50. 4 mm castings were prepared according to the formulations. The casting were released and post cured during 24hrs at 80°C. The results are shown in table 5.

Table 5

| | Resin A (g) | Resin E (g) | Methacrylate (g) | E modulus (GPa) | Tensile strength (MPa | Elongation at break (%) | Molar ratio methacrylate/fumarate |
|---|---|---|---|---|---|---|---|
| 7 | 40 | 20 | HPMA (20) PEG200DMA (20) | 0.9 | 23.4 | 46.0 | 3.5 |
| 8 | 40 | 10 | HPMA (30) PEG200DMA (20) | 1.9 | 42.7 | 44.3 | 7.6 |
| 8 | 40 | 5 | HPMA (35) PEG200DMA (20) | 2.3 | 54.0 | 23.4 | 13.8 |
| I | 40 | 0 | PEG200DMA (30) HPMA (30) | 2.9 | 29.3 | 1.0 | 41.2 |

Table 5 shows that unsaturated polyester resin (b) as claimed needs to be present in order to get high elongation at break.

Example 10-12 and comparative experiment J

Resin formulations were prepared according to table 5 to which 0.5g cobalt octanoate (1%Co in spirits) was added followed by 2% Butanox M50. 4 mm castings were prepared according to the formulations. The casting were

released and post cured during 24hrs at 80°C. The results are shown in table 6.

Table 6

| | Resin A (g) | Resin E (g) | Methacrylate (g) | E mod (GPa) | Tensile strength (MPa | Elongation at break (%) | Molar ratio methacrylate/fumarate |
|---|---|---|---|---|---|---|---|
| 10 | 40 | 20 | PEG200DM A (40) | 0.9 | 28.3 | 16.0 | 3.1 |
| 11 | 40 | 10 | PEG200DM A (50) | 1.5 | 39.4 | 10.5 | 6.7 |
| 12 | 40 | 5 | PEG200DM A (55) | 1.5 | 40.6 | 11.5 | 11.9 |
| J | 40 | 0 | PEG200DM A (60) | 1.9 | 43.15 | 3.3 | 36.7 |

Table 5 and 6 show that unsaturated polyester resin (b) as claimed needs to be present in order to get high elongation at break. They further show that the higher the molar ratio between methacrylates and fumarates, the lower the elongation at break becomes. They also show that different methacrylate diluents and mixture of methacrylate diluents can be used as long as the WPU's and molar ratio between methacrylates and fumarates are as claimed.

## Claims

**1.** Radically curable, thermosetting resin composition comprising

(a) at least one telechelic urethane methacrylate functional polyester resin,
(b) at least one unsaturated polyester resin, and
(c) at least one methacrylate containing compound, wherein

the telechelic urethane methacrylate functional polyester resins (a) have a weight per unsaturation $WPU_{(a)}$ from 460 up to and including 1000 Dalton, the unsaturated polyester resins (b) have a weight per fumarate unsaturation $WPU_{fumarate(b)}$ from 200 up to and including 1000 Dalton, and
the resin composition is further **characterized in that** the molar ratio between the methacrylates present in the resin composition and the fumarates present in the resin composition is is from 1 up to and including 25, and **in that** the amount of styrene in the resin composition is lower than 2 wt.% (relative to the total resin composition).

**2.** Resin composition according to claim 1, **characterized in that** the WPU of the telechelic urethane methacrylate functional polyester resins (a) ($WPU_{(a)}$) is ≥ 480, more preferably ≥ 500 Dalton and ≤ 950, more preferably ≤ 900 Dalton and even more preferably ≤ 750 Dalton.

**3.** Resin composition according to any of the preceding claims, **characterized in that** the weight per fumarate unsaturation $WPU_{fumarate(b)}$ of the unsaturated polyester resins (b) is ≥ 225, more preferably ≥ 250, even more preferably ≥ 275 and even more preferably ≥ 300 and ≤ 750, more preferably ≤ 700, even more preferably ≤ 650 and even more preferably ≤ 500.

**4.** Resin composition according to any of the preceding claims, **characterized in that** the methacrylate containing compounds (c) have a weight per methacrylate unsaturation $WPU_{methacrylate(c)}$ from 100 up to and including 250.

**5.** Resin composition according to any of the preceding claims, **characterized in that** the molar ratio between the methacrylates present in the resin composition and the fumarates present in the resin composition is from 1 up to and including 18.

**6.** Resin composition according to any of the preceding claims, **characterized in that** the reactive unsaturations of the telechelic urethane methacrylate functional polyester resins are fumarate unsaturations.

7. Resin composition according to any of the preceding claims, **characterized in that** the telechelic urethane methacrylate functional polyester resins (a) comprises building blocks derived from 2,2-dialkyl-1,3-propanediol in which the alkyl groups are independently selected from a C1-C4 alkyl.

8. Resin composition according to any of the preceding claims, **characterized in that** the telechelic urethane methacrylate functional polyester resins (a) comprises phthalic building blocks, preferably isophthalic building blocks.

9. Resin composition according to any of the preceding claims, **characterized in that** the telechelic urethane methacrylate functional polyester resins (a) are telechelic urethane methacrylate functional unsaturated polyester resins comprising fumarate building blocks, building blocks derived from 2,2-dialkyl-1,3-propanediol in which the alkyl groups are independently selected from a C1-C4 alkyl and further comprising phthalic building blocks and wherein the ratio of the molar amount of the building blocks derived from 2,2-dialkyl-1,3-propanediol and the molar amount of phthalic building blocks is from 4:1 up to and including 12:1.

10. Resin composition according to any of the preceding claims, **characterized in that** the telechelic urethane methacrylate functional polyester resins (a) are telechelic urethane methacrylate functional unsaturated polyester resins prepared from at least

(i) an hydroxyl functional methacrylate,
(ii) a (poly)isocyanate with an isocyanate functionality of ≥ 2
(iii) an hydroxyl functional unsaturated polyester resin with an acid value < 25 mg KOH/g resin, an hydroxyl value of from 70 up to and including 200 mg KOH/ g resin and a molecular weight $M_n$ from 1000 up to and including 2000 Dalton.

11. Resin composition according to any of the preceding claims, **characterized in that** the telechelic urethane methacrylate functional polyester resins (a) present in the resin composition are according to the following structural formula

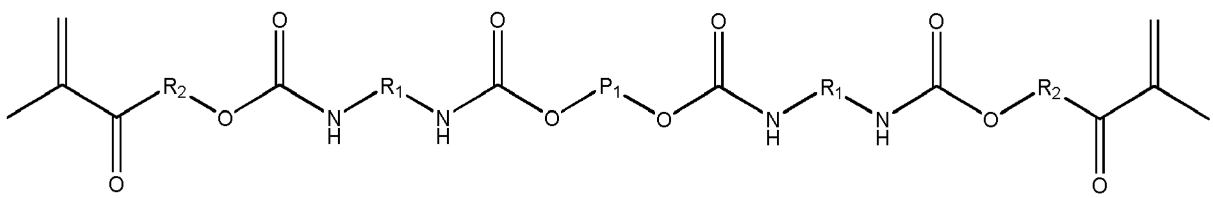

in which $P_1$ is representing an unsaturated polyester resin, $R_1$ is the isocyanate residue and $R_2$ is -(CH2)2- and/or -CH2CH(CH3)-.

12. Resin composition according to claim 11, **characterized in that** $P_1$ originates from an hydroxyl functional unsaturated polyester resin with an acid value < 25 mg KOH/g resin and an hydroxyl value of from 70 up to and including 200 mg KOH g resin and a molecular weight $M_n$ from 1000 up to and including 2000 Dalton.

13. Resin composition according to any of the preceding claims, **characterized in that** the reactive unsaturations of the unsaturated polyester resins (b) are fumarate unsaturations.

14. Resin composition according to any of the preceding claims, **characterized in that** the unsaturated polyester resins (b) have a molecular weight $M_n$ from 375 up to and including 550 Dalton.

15. Resin composition according to any of the preceding claims, **characterized in that**

- the telechelic urethane methacrylate functional polyester resins (a) have a methacrylate functionality > 1.7 and a molecular weight $M_n$ of from 1600 up to and including 3500 Dalton;
- the unsaturated polyester resins (b) have an acid value < 20 mg KOH/g resin, an hydroxyl value of < 30 mg KOH/ g resin and a viscosity at room temperature of from 50 up to and including 400 mPa.s; and
- the methacrylates (c) have a molecular weight $M_n$ < 500 Dalton.

16. Resin composition according to any of the preceding claims, **characterized in that** the resin composition is free of

styrene.

**17.** Resin composition according to any of the preceding claims, **characterized in that** the resin composition further comprises a radical initiator in an amount of between 0.1 and 5 wt% (relative to the total resin composition) and the radical initiator is a photo-initiator or a thermal initiator or a redox initiator.

**18.** Cured objects or structural parts obtained by mixing the compounds of a resin composition according to claim 17 to obtain a mixture and irradiating the mixture with light of suitable wavelength in case the resin composition comprises a photo-initiator, or heating the mixture in case the resin composition comprises a thermal initiator or mixing a peroxide into the mixture.

**19.** Use of the cured object according to claim 18 in the field of chemical anchoring, roofing, gelcoats, bonding paste, containers, tanks, pipes, automotive parts, flooring, windmill blades, aviation, off shore applications.

Europäisches Patentamt
European Patent Office
Office européen des brevets

# EUROPEAN SEARCH REPORT

Application Number
EP 12 19 7528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 390 662 A (ANDO TOMONORI [JP] ET AL) 28 June 1983 (1983-06-28)<br>* claim 1; examples 1-4 *<br>* column 3, paragraph 3 *<br>* column 4, paragraph 3 *<br>* column 5, paragraph 4 - column 6, paragraph 1 *<br>----- | 1-19 | INV.<br>C08L67/00<br>C09D167/00<br>C08L75/06<br>C08L67/07 |
| Y | EP 0 009 761 A2 (BAYER AG [DE]) 16 April 1980 (1980-04-16)<br>* claim 1 *<br>* page 8, paragraph 1 *<br>* pages 9-13 *<br>* pages 21-23 *<br>* tables 1,2 *<br>----- | 1-19 | |
| Y | US 5 342 554 A (MCBAIN DOUGLAS S [US] ET AL) 30 August 1994 (1994-08-30)<br>* claims 1,6,7,17 *<br>* column 3, paragraph 2-5 *<br>* column 7, paragraph 2 *<br>* column 9, paragraph 5 *<br>* column 10, paragraph 3; examples 11, 12; table 3 *<br>* column 12, paragraph 2 *<br>----- | 1-19 | TECHNICAL FIELDS SEARCHED (IPC)<br>C08L |
| Y | DATABASE WPI<br>Week 200425<br>Thomson Scientific, London, GB;<br>AN 2004-260872<br>XP002703273,<br>-& JP 2004 010771 A (JAPAN COMPOSITE KK) 15 January 2004 (2004-01-15)<br>* abstract *<br>----- | 1-19 | |
| Y | JP S54 54192 A (TEIJIN LTD) 28 April 1979 (1979-04-28)<br>* abstract *<br>----- | 1-19 | |

The present search report has been drawn up for all claims

3

| Place of search | Date of completion of the search | Examiner |
|---|---|---|
| Munich | 18 July 2013 | Lauteschlaeger, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 12 19 7528

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2013

| Patent document cited in search report | | Publication date | Patent family member(s) | | Publication date |
|---|---|---|---|---|---|
| US 4390662 | A | 28-06-1983 | DE | 3049958 A1 | 18-03-1982 |
| | | | JP | S5667322 A | 06-06-1981 |
| | | | JP | S6133864 B2 | 05-08-1986 |
| | | | US | 4390662 A | 28-06-1983 |
| | | | WO | 8101292 A1 | 14-05-1981 |
| EP 0009761 | A2 | 16-04-1980 | DE | 2843822 A1 | 17-04-1980 |
| | | | EP | 0009761 A2 | 16-04-1980 |
| | | | ES | 8102584 A1 | 16-04-1981 |
| | | | JP | S5552311 A | 16-04-1980 |
| | | | JP | S6111259 B2 | 02-04-1986 |
| | | | US | 4413072 A | 01-11-1983 |
| US 5342554 | A | 30-08-1994 | NONE | | |
| JP 2004010771 | A | 15-01-2004 | NONE | | |
| JP S5454192 | A | 28-04-1979 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020091214 A1
- WO 03093381 A
- WO 2008077586 A